Europäisches Patentamt

**European Patent Office**

Office européen des brevets

(11) Publication number:

**0 108 885**
**A1**

## EUROPEAN PATENT APPLICATION

(21) Application number: **83109030.3**

(22) Date of filing: **13.09.83**

(51) Int. Cl.³: **G 11 B 5/68**

(30) Priority: **12.11.82 US 441197**

(43) Date of publication of application: **23.05.84**
**Bulletin 84/21**

(84) Designated Contracting States: **DE FR GB**

(71) Applicant: **International Business Machines Corporation,**
**Old Orchard Road, Armonk, N.Y. 10504 (US)**

(72) Inventor: **Haines, Robert Samuel, Sunshine Canyon,**
**Boulder Colorado 80302 (US)**

(74) Representative: **Colas, Alain, Compagnie IBM France**
**Département de Propriété Industrielle, F-06610 La**
**Gaude (FR)**

(54) **Magnetic recording media including post-chlorinated polyvinyl chloride (CPVC).**

(57) Magnetic recording media of the flexible type, wherein the media is composed of a flexible nonmagnetic substrate such as polyethylene terephthalate coated with a magnetic ink. The ink is composed of chromium dioxide ferromagnetic particles and of a binder comprised of thermoplastic polyurethane and post-chlorinated polyvinyl chloride (CPVC).

## Description

## MAGNETIC RECORDING MEDIA INCLUDING
## POST-CHLORINATED POLYVINYL CHLORIDE (CPVC)

## Technical Field

This invention relates to the field of flexible magnetic recording media, and to the composition of a magnetic ink which is coated onto a flexible nonmagnetic substrate during manufacture of the media.

## Background of the Invention

The present invention is an improvement upon the invention defined in U.S. Patents 4,284,750 and 4,303,738 which are incorporated herein by reference.

These patents describe magnetic recording media having chromium dioxide magnetic particles in a polyurethane binder. The former patent describes use of the brand MORTHANE thermoplastic polyurethane, while the later patent describes the use of the brand ESTANE.

It has been found that while these media operate well under most environments, rolls of such media, for example 500-foot (152,4m) rolls of 1/2 inch (1,27 cm) tape, having about a five-inch (12,7 cm) diameter hub, may exhibit excessive head drag when subjected to a high storage temperature of about 30°C at a high relative humidity of, for example 85 % R.H. This environmental condition tends to compress the dry ink layer, and cause the surface of the layer to become ultra smooth. This is particularly true of the length of tape on the inside of the roll, adjacent the reel's hub. When this inner length of tape is later passed over a magnetic head, excessive friction drag exists between the head and the tape.

0108885

This tendency toward excessive drag appears to be more prevalent in media having chromium dioxide pigment, than in media having iron oxide pigment, perhaps because the chromium dioxide media has a smoother surface finish.

This drag problem has been solved in the prior art by the relatively expensive expedient of providing a backcoating on the tape, i.e. a carbon-containing coating on the side of the nonmagnetic substrate opposite the magnetic ink coating.

This drag problem is also more pronounced in the present day small-cartridge reels of tape, having for example an inner hub about two inches (5,08 cm) in diameter. With reels having a small-diameter hub, higher normal forces (i.e. a force vector along the reel's radius) are generated ; that is, the force with which the tape convolutions are packed, one upon the other, is higher.

The present invention relates to unexpectedly eliminating this drag problem by incorporating post-chlorinated polyvinyl chloride into the recording layer of the media.

While the prior art, of which U.S. Patent 3,247,017 is typical, recognizes the use of chlorinated polyvinyl chloride (CPVC) in magnetic recording media, the prior art does not teach the use of post-chlorinated CPVC in magnetic recording media, nor the solution to this drag problem by the use of post-chlorinated CPVC---particularly when such media includes chromium dioxide, ferromagnetic particles.

U.S. Patents 3,649,541 and 3,840,400 are cited as examples of prior art magnetic recording media having a polyurethane binder and chromium dioxide magnetic particles.

## The Invention

The present invention is practiced by the use of post-chlorinated CPVC in the polyurethane binder of magnetic

0108885

recording media. More specifically, the media of the present invention utilizes chromium dioxide magnetic particles in media made up of the brand GEON CPVC RESINS 627x563 and 623x563 (where the numbers 627, 625 and 623 define molecular weights) ; and the brand MORTHANE 310 thermoplastic polyurethane resin. As a result, backcoating of the media is no longer necessary.

While the present invention is not to be limited thereto, it has special utility where the media's tape reels have a small inner-tape-convolution hub.

It is though that the present invention provides a harder dry ink layer, and as a result, the layer does not flow under conditions of pressure, elevated temperature and high humidity.

While the term post-chlorinated CPVC is well known in the art, it is appropriate to define it as CPVC polymer chains wherein the chlorine content of the majority of the chain's monomer units have been raised to the range of from 57 to 72 % by weight.

The GEON brand of post-chlorinated CPVC, as used in the various examples of the present invention, is of the general type described in U.S. Patent 3,100,762, incorporated herein by reference. This product is post-chlorinated to about 67 % chlorine, by weight.

In its broadest aspects, the present invention provide magnetic recording media comprising a ferromagnetic pigment, a urethane binder and post-chlorinated CPVC. In its specific aspects, the present invention comprises chromium dioxide magnetic pigment in a volume percent of about 51 ; a polymeric binder, comprising the MORTHANE brand, in a volume percent of about 25 ; and the GEON brand post-chlorinated CPVC in a volume percent of about 11, the remainder comprising crosslinker, lubricant and pigment dispersant.

0108885

GEON is a trademark for a line of post-chlorinated polyvinyl chloride resins by B.F. Goodrich Chemical Compagny. MORTHANE is a trademark for thermoplastic polyurethane resins by Morton-Norwich Products, Inc.

Media formulations which incorporate the present invention include (1) ferromagnetic magnetic pigment, preferably chromium dioxide, in about 51 volume percent ; (2) a polymeric binder, preferably polyurethane of the MORTHANE brand, in a 18 to 29 volume percent range, and (3) a post-chlorinated CPVC, preferably the brand GEON, in an 18 to 7 volume percent range.

Of the remaining 13 volume percent, a TDS lubricant, as described in aforesaid U.S. Patent 4,303,738 is desirable, and in a range of about 6 volume percent ; and a pigment dispersant, preferably YELKIN-TS brand (Ross & Rowe, Inc.) of soybean lecithin, is desirable, and in a range of about 7 volume percent.

While not necessary, it may be that those skilled in the art will want to add (about 1 volume %) a crosslinker, such as the MONDUR-MRS (Mobay Chemical Co.) of polymethylene polyphenyl isocyanate.

The amount of chromium dioxide to be used in the practice of the present invention is not critical. The above-stated preferred amount is used in the following examples. Those skilled in the art may wish, however, to depart from this amount, while practicing the present invention.

The new and unusual results achieved by the present invention is apparent from the following Comparative Example IV as compared to Examples I, II and III of the present invention.

Comparative Example IV is a chromium dioxide media whose binder comprises only MORTHANE.

Examples I, II and III are chromium dioxide media in accordance with the present invention, having mixtures of MORTHANE and GEON in the following MORTHANE/GEON volume percents : 18/18 ; 25/11 and 29/7 respectively.

The finely divided magnetic pigment used in the practice of the present invention is not critical, and is of the general type known to those of skill in the art.

## Example 1

In example I, the binder per se comprises 50 % by volume MORTHANE, and 50 % by volume GEON.

|                        | Liters | Volume Percent |
|------------------------|--------|----------------|
| chromium Dioxide       | 26.76  | 51.0           |
| YELKIN-TS (dispersant) | 3.59   |                |
| MORTHANE CA-310        | 9.50   | 18.0           |
| GEON 627x563           | 9.50   | 18.0           |
| TDS (lubricant)        | 3.02   |                |
| MONDUR-MRS             | 0.15   |                |
|                        |        | *13.0          |
|                        | 52.52  | 100.0          |

* where the listed 13 volume percent is the total of the YELKIN, TDS and MONDUR.

6   0108885

## Example II

In example II, the binder per se comprises 70 % by volume MORTHANE, and 30 % by volume GEON.

|  | Liters | Volume Percent |
|---|---|---|
| chromium Dioxide | 26.76 | 51.0 |
| YELKIN-TS (dispersant) | 3.59 | |
| MORTHANE CA-310 | 13.28 | 25.0 |
| GEON 627x563 | 5.72 | 11.0 |
| TDS (lubricant) | 3.02 | |
| MONDUR-MRS | 0.15 | |
| | | *13.0 |
| | 52.52 | 100.0 |

* where the listed 13 volume percent is the total of the YELKIN, TDS and MONDUR.

## Example III

In example III, the binder per se comprises 80 % by volume MORTHANE, and 20 % by volume GEON.

|  | Liters | Volume Percent |
|---|---|---|
| chromium Dioxide | 26.76 | 51.0 |
| YELKIN-TS (dispersant) | 3.59 | |
| MORTHANE CA-310 | 15.22 | 29.0 |
| GEON 627x563 | 3.78 | 7.0 |
| TDS (lubricant) | 3.02 | |
| MONDUR-MRS | 0.15 | |
| | | *13.0 |
| | 52.52 | 100.0 |

* where the listed 13 volume percent is the total of the YELKIN, TDS and MONDUR.

## Comparative Example IV

In Comparative Example IV, the binder per se is 100 % by volume MORTHANE.

|  | Liters | Volume Percent |
|---|---|---|
| chromium Dioxide | 26.76 | 51.0 |
| YELKIN-TS (dispersant) | 3.59 | |
| MORTHANE CA-130 | 19.00 | 36.0 |
| TDS (lubricant) | 3.02 | |
| MONDUR-MRS | 0.15 | |
|  | | *13.0 |
|  | 52.52 | 100.0 |

* where the listed 13 volume percent is the total of the YELKIN, TDS and MONDUR.

## Comparative Testing

The above examples are all understood to comprise flexible magnetic recording media wherein the chromium dioxide particle containing layer is carried by a conventional, nonmagnetic web of thin polyester film such as the brand MYLAR (E.I. du Pont de Nemours & Co.)

Methods of mixing, solvents used, and methods of coating and finishing are well known to those of skill in the art, and will not be described herein.

All examples were without a backcoat.

Reels of 1/2 inch (1,27 cm) wide tape were wound, at normal-usage, constant tension and/or torque, and on 50-millimeter diameter hubs, using 100 meters of tape for each of the four above examples. These small-hub-diameter reels were stored at 30°C and 85 % R.H. for 28 days. They were then

0108885

removed from this environment and left at ambient temperature and humidity for 24 hours before being tested for head drag.

Head drag was determined from beginning-of-tape (BOT) to end-of-tape (EOT) by mounting each (supply) reel to one side of a magnetic head, and pulling the tape over the head onto another (take-up) reel which was driven by a motor whose drive current was calibrated to read the force necessary to drag the tape over the head. While the exact test means, for example the angle of tape-wrap of the head, is not critical, it must be the same for all reels,in order to make a valid comparison.

This drive-current-calibrated force was measured at 10-meter intervals, from BOT to EOT. The results for these four tapes are tabulated in the following table. By definition, EOT is the tape adjacent the reel's inner hub.

FORCE IN GRAMS AT 10-METER
INTERVALS ALONG TAPES

|         | BOT |    |    |     |     |       |      |       |     | EOT  |
|---------|-----|----|----|-----|-----|-------|------|-------|-----|------|
| Meters  | 10  | 20 | 30 | 40  | 50  | 60    | 70   | 80    | 90  | 100  |
| Example |     |    |    |     |     |       |      |       |     |      |
| I       | 15  | 18 | 22 | 27  | 24  | 24    | 26   | 29    | 28  | 38   |
| II      | 16  | 13 | 13 | 14  | 16  | 15    | 18   | 21    | 20  | 29   |
| III     | 15  | 16 | 16 | 16  | 20  | 23    | 27   | 32    | 38  | 41   |
| IV      | 19  | 23 | 58 | 110 | 141 | FORCE | TOO  | LARGE | FOR |      |
|         |     |    |    |     |     | MOTOR | TO MOVE | TAPE |   |      |

As is seen from the table, head drag increased so much in the Comparative Example IV tape (the tape without CPVC), that the motor could no longer pull the tape over the magnetic head in the mid-reel to EOT regions. With the tapes of the present

9      0108885

invention, the head drag increased only marginally from BOT (10 meters) to EOT (100 meters).

As is apparent from the above, the present invention exhibits much less drag than does Comparative Example IV.

While the invention has been particularly shown and described with reference to preferred embodiments thereof, it will be understood by those skilled in the art that various changes in form and details may be made therein without departing from the spirit and scope of the invention.

0108885

## Claims

1. Magnetic recording media characterized in that it comprises a non-back-coated base substrate having a magnetic recording layer thereon, said layer having finely divided magnetic particles dispersed in a binder of thermoplastic polyurethane and post-chlorinated polyvinyl chloride.

2. The media of claim 1 wherein the volume percent of polyurethane is in the range 18 to 29, and the volume percent of post-chlorinated polyvinyl chloride is in the range 18 to 7, the total being about 36 volume percent.

3. The media of claim 1 or 2 wherein said magnetic particle is chromium dioxide.

4. The media of claim 1 wherein said magnetic particle is chromium dioxide in a volume percent of about 51, wherein said post-chlorinated polyvinyl chloride is post chlorinated in the range of about 57 to 72 % chlorine content by weight, and wherein the volume percent of polyurethane is in the range 18 to 29, and the volume percent of post-chlorinated polyvinyl chloride is in the range 18 to 7, the total being about 36 volume percent.

5. The media of claim 1 wherein said post-chlorinated polyvinyl chloride is of a molecular weight range of about 623 to 627, and is post-chlorinated to about 67 % chlorine.

6. The media of claim 5 wherein said magnetic particle is chromium dioxide in a volume percent of about 51, and wherein the volume percent of polyurethane is in the range 18 to 29, and the volume percent of post-chlorinated polyvinyl chloride is in the range 18 to 7, the total being about 36 volume percent.

0108885

7.  The media according to anyone of the preceding claims
    wherein the volume percent polyurethane is 18, and the
    volume percent post-chlorinated polyvinyl chloride is 18.

8.  The media according to any one of claims 2 through 6
    wherein the volume percent polyurethane is 25, and the
    volume percent post-chlorinated polyvinyl chloride is 11.

9.  The media according to anyone of claims 2 through 6
    wherein the volume percent polyurethane is 29, and the
    volume percent post-chlorinated polyvinyl chloride is 7.

10. The media according to any one of the preceding claims
    wound onto a reel whose hub is of a small diameter.

11. The media of claim 10 wherein said hub is of about 50mm.
    diameter.

| | **DOCUMENTS CONSIDERED TO BE RELEVANT** | | EP 83109030.3 | |
|---|---|---|---|---|
| Category | Citation of document with indication, where appropriate, of relevant passages | Relevant to claim | CLASSIFICATION OF THE APPLICATION (Int. Cl. ³) | |
| A,D | US - A - 4 303 738 (GINI) <br> * Claims 1-7 * <br> -- | 1-4,6-9 | G 11 B 5/68 | |
| A,D | US - A - 3 247 017 (EICHLER) <br> * Claims 1-3; example 1 * <br> -- | 1 | | |
| A | DE - A1 - 3 208 865 (FUJI) <br> * Abstract; claim 8 * <br> -- | 1,7 | | |
| A | DE - A1 - 3 033 883 (TDK) <br> * Fig. 1-4 * <br> -- | 10 | | |
| A | DE - A1 - 3 000 703 (NIFCO) <br> * Fig. 1-3 * <br> ---- | 11 | **TECHNICAL FIELDS SEARCHED (Int. Cl. ³)** <br><br> G 11 B 5/00 <br> C 08 J 5/00 <br> B 32 B 27/00 <br> G 11 B 23/00 | |

The present search report has been drawn up for all claims

| Place of search | Date of completion of the search | Examiner |
|---|---|---|
| VIENNA | 30-12-1983 | BERGER |